# EUROPEAN PATENT APPLICATION

(11) **EP 1 949 789 A1**
(43) Date of publication of application: **30.07.2008**
(21) Application number: 08103264.1
(22) Date of filing: 03.05.2002
(51) Int. Cl.: A01N 63/00, A01N 63/04, A01N 37/34, C05G 3/02, C05F 11/08

(54) **Biological-chemical fungicide compositions and methods of use**

(30) Priority: 11.05.2001 US 290039 P; 12.03.2002 US 94613
(62) Divisional of application: 02729111.1
(71) Applicant: Naturize, Inc., Jacksonville, FL 32224 (US)
(72) Inventor: Selvig, Thomas A., Jacksonville, CA 32224 (US); Porter, Paul, C., Jacksonville, CA 32224 (US)
(74) Representative: Martin, Philip John

(57) **Abstract**

The present invention is directed to biologic-chemical fungicide compositions (BCFs) that include one or more chemical fungicides, and microorganisms including gram-positive and/or gram-negative bacteria and yeast. Any chemical fungicide or combination of fungicides can be used. The BCFs typically also include an optional nutrient component in an amount sufficient to support the growth and replication of the microorganisms. If the BCF is applied to soil rich in nutrients, or if the crops would support the growth of the microorganisms in the BCFs, then the nutrients can be left out. Compositions having a biologic component of microorganisms in addition to one or more chemical fungicides are significantly more effective than chemical fungicides applied without microorganisms. The invention is also directed to chemical-free biologic fungicides that contain microorganisms with suppressive activity against pathogenic fungi, and nutrients.

## Description

### FIELD OF THE INVENTION

The present invention relates to fungicide compositions and their use for controlling or preventing pathogenic fungi infections in plants.

### CROSS REFERENCE TO RELATED APPLICATIONS

This application claims the benefit of Provisional Application No. 60/290,039, filed on May 11,2001, the entire contents of which is hereby incorporated by reference as if fully set forth herein, under 35 U.S.C. Section 120.

### BACKGROUND OF THE INVENTION

Some 200,000 of the 100,000 described species of fungi produce one or more diseases in various plants. Fungal infections account for about 75% of all infectious plant diseases, and a single plant species can be vulnerable to 10 to 50 different phytopathogenic fungi. Viruses, rickettsia, algae, mycoplasma-like organisms, and parasitic seed plants cause plant diseases. Fungi are particularly difficult to control because they are plant-like organisms that live in close proximity with the host plant, therefore agents that are toxic to the fungi are also likely to be toxic to the plant. Further, many fungi undergo secondary cycles rapidly and produce from 12 to 25 generations during a three-month growing season, necessitating repeated applications of fungicides.

There are more than 175 different fungicides available, most of which are recently discovered organic compounds. Most fungicides act as protectants, preventing spore germination and subsequent fungal penetration of plant tissues. Protectants should be applied repeatedly to cover new plant growth and to replace fungicide that deteriorates or is washed off the plant. Fungicides fall into two basic chemical categories, organic and inorganic, and they are functionally distinguished as either contact fungicides that do not penetrate the plant, or systemic fungicides that do penetrate. Historically the most widely used fungicides are inorganic sulfur, copper and mercury compounds; tin, zinc, iron and manganese compounds have also been used. However, mercury is no longer used because of its high toxicity, and both copper and sulfur have the disadvantage of retarding the growth of the host plants. The organic fungicides have the advantage of being much more efficient than inorganics, they typically last longer and are safer for crops, animals and the environment. Most of the new organic fungicides are systemic and they have significantly lower phytotoxicity than inorganic fungicides, are readily degraded by soil microorganisms, and tend not to accumulate in the environment.

Many effective chemical fungicides have been identified that can kill or inhibit the development of pathogenic fungi on plants, on seeds and in the soil, either alone or in combination. However, there is still a great need for fungicides that act faster, have increased effectiveness in killing target fungi, require fewer applications, and can be applied in lower amounts than are presently used in order to reduce cost, toxicity to the targeted infected plants, and the buildup of excess chemicals in the soil. The high cost of treating crops with chemical fungicides lies both in the cost of the chemicals themselves, and in the need for frequent application which involves use of heavy equipment that is expensive to operate and contributes to environmental contamination. The fungicide compositions described below enable the use of lower amounts of chemical fungicide by improving the speed of reaction and the percentage and rate of target fungus mortality, and by reducing the frequency of application.

### Definitions

"Agronomically acceptable salts" as used herein means mineral salts that do not induce negative effects on agricultural crops when used properly. They include, metal salts such as sodium, potassium, calcium and magnesium salts, ammonium salts such as isopropyl ammonium salts and trialkylsulfonium salts such as triethylsulfonium salts.

"cfu" as used herein means colony forming unit.

"Complex humate-based carbon nutrient-containing matrix" as used herein means any matrix that contains complex humate-based carbon nutrients. Such nutrients include but are not limited to sugars (including glucose, fructose, and molasses), plasma, manure tea, peat extracts, compost extracts, coal extracts, Ienordite extracts, kelp or extracts thereof, and other humic matrices known in the art that contain humic molecules that are rich in macronutrients, nitrogen, phosphorus and/or potassium. The matrix may also contain growth-stimulating compounds such as a blend of botanic/carbohydrates, growth factors, amino acids and micro-nutrients including calcium, boron, copper, molybdemum, manganese, magnesium, iron, sulfur and zinc as needed. The extracts from manure, peat, compost and leanoride contain fulmic and ulmic acids.

"Cultivated plants" as used herein means any commercially grown or home-grown grown plant or crop including, by way of example, cereals (wheat, barley, rye, oats, rice); beet (sugar beet and fodder beet); pomes, drupes and soft fruit (apples, pears, plums, peaches, almonds, cherries, strawberries, raspberries and blackberries); leguminous plants (beans, lentils, peas, soybeans); oil plants (rape, mustard, poppy, olives, sunflowers, coconut, castor oil plants, cocoa beans, groundnuts); cucumber plants (cucumber, marrows, melons); fiber plants (cotton, flax, hemp, jute); citrus fruit (oranges, lemons, grapefruit, mandarins); vegetables (spinach, lettuce, asparagus, cabbages, celery, tomatoes, carrots, onions, tomatoes, potatoes, paprika) or plants such as maize, tobacco, nuts, coffee, sugar cane, tea, vines, hops, bananas, avocados and natural rubber plants, as well as ornamentals.

"Fungus" as used herein is a general term used to denote a group of eukaryotic protists, including mushrooms, yeasts, rusts, molds, smuts, etc., which are characterized by the absence of chlorophyll and by the presence of a rigid cell wall composed of chitin, mannans and sometimes cellulose. Fungi are usually of simple morphological form or show some reversible cellular specialization, such as the formation of pseudoparenchymatous tissue in the fruiting body of a mushroom. The dimorphic fungi grow, according to environmental conditions, as molds or yeasts.

"Fungicide" as used herein is an agent or chemical that destroys fungi, or slows its growth and reproduction. Fungicides include fungistats (agents that inhibit the growth of fungi).

"Humic molecule" as used herein means a carbon molecule with open and available hydrogen and oxygen bonding sites and exchange capacity.

"Nutrient matrix" as used herein means a matrix that provides growth-stimulating compounds for supporting microbial growth and multiplication, and that is rich in nitrogen, phosphorous and/or potassium macronutrients.

"Label Rate" as used herein means the amount of active ingredient of a chemical fungicide applied as recommended by the manufacturer.

"Plant" as used herein includes seedlings, bushes and trees.

"Phytohormones" as used herein means plant hormones including any of the hormones produced naturally in plants and that are active in minute amounts in controlling growth and other functions at a site remote from the place of production. The three principal types are auxins, cytokinins and gibberellins.

"Suppressive Bacteria" as used herein means any bacteria that can kill or inhibit the growth of fungi by any means.

### SUMMARY OF THE INVENTION

One aspect of the invention is directed to fungicide compositions that include (a) one or more chemical fungicides, and (b) microorganisms in a biologic component, that includes gram-positive and/or gram-negative bacteria, yeast and even certain beneficial fungi that are not inhibited or killed by the chemical fungicide. These compositions are called biologic-chemical fungicides, hereinafter "BCFs." The BCF compositions typically contain optional (c) nutrients in an amount sufficient to support the growth and replication of the microorganisms in the biologic component. One instance in which the nutrient component can be eliminated is where the fungicide composition is applied to organic soil that is rich in nutrients. In another aspect, microorganisms are chosen that have a suppressive action on pathogenic fungi. Any nutrients that support the growth and replication of the microorganisms can be used. In one aspect, the nutrient component is a complex carbon nutrient-containing matrix rich in nitrogen, phosphorous and potassium macronutrients. The compositions optionally include an agriculturally effective amount of adhesive, surfactant or dispersant. Any chemical fungicide or combination of fungicides can be used in the compositions of the present invention. Examples of chemical fungicides include chlorthalonil, and metal fungicides. The microorganisms can be in either the vegetative or spore form, or both.

The present invention is also directed to chemical-free biologic fungicides that include suppressive microorganisms and nutrients. In another aspect, the invention is directed to methods of controlling or preventing infection of a plant by phytopathogenic fungi, by applying to the plant or to the locus of the plant, the BCF or chemical-free biologic compositions. In another aspect, the amount applied per a unit area of a chemical fungicide is within a range of from about a maximum label rate or amount per the unit area recommended by a manufacturer of the chemical fungicide, to about 10% of a minimum label rate or amount per the unit area recommended by the manufacturer. In another aspect, the amount of microorganisms in the compositions is from about 1 x 10⁴ to about 1 x 10¹⁴cfu/acre.

### DETAILED DESCRIPTION

The present invention relates to environmentally compatible fungicide compositions that include one or more chemical fungicides, plus a biologic component that includes microorganisms such as bacteria, yeast and fungi. The addition of a biologic component to the chemical fungicide(s) increases the efficacy and reduces the toxicity of the new compositions compared to chemical fungicides applied without the added microorganisms. An aspect of the invention includes methods of using the new fungicide compositions to control, prevent or reduce pathogenic fungus infestations in growing plants, on seeds, and on harvested crops.

It has been discovered that adding a biologic component such as bacteria, yeast, fungi or mixtures thereof to one ore more chemical fungicide(s), significantly reduces the amount of chemical fungicide(s) required to prevent or control fungus infection in plants. The new fungicide compositions of the present invention are hereinafter referred to as biologic-chemical fungicide compositions ("BCFs"). BCFs permit the use of less chemical fungicide in each application, or permit lengthening the interval between applications thereby lowering the total amount of chemicals applied over time. BCFs therefore have proportionately lowered environmental and plant toxicity than the same chemical fungicides applied alone in amounts and with the frequencies currently recommended by manufacturers. Because chemical fungicides are potentially toxic to the targeted plants as well as to pathogenic fungi, reducing the amount of chemical fungicide applied to a crop helps maximize crop vitality and production. The new BCFs can be readily produced for commercial use, are cheaper because lower amounts of chemical fungicides are required, and find utility in treating a wide range of pathogenic fungal infections by varying the chemical component of the composition. BCFs can be used to treat plants, seeds, cuttings, and plant media and for post-harvest treatment of crops.

The biologic-chemical fungicide compositions of the present invention contain:
a. a biologic component containing microorganisms including bacteria, yeast, fungi, microfungi, mold, lichens, algae, viruses, protozoa, or mixtures thereof; and
b. one or more chemical fungicides, that can be organic, inorganic, systemic or contact fungicides.

The BCF compositions typically further contain:
c. an optional nutrient component that provides growth stimulating compounds for supporting the growth and replication of the microorganisms in the biologic component.

The present invention may optionally contain one or more broad-base adhesives, surfactants or dispersants as is common in the art, to enhance fungicide adsorption onto the plants, seeds, fruits, and onto the targeted pathogenic fungi. Other additives known in the art may also be optionally included such as pesticides, insecticides, miticides, herbicides, acaracides, gibberellins, nematocides, and molluskicides. The BCF compositions of the present invention can also be augmented with plant growth factors and hormones, antibiotics, fulvic acid, ulmic acid, betains, and auxins. In one aspect, the BCFs include harpin protein sold under the trade name MESSENGER™ by Eden BioSciences, which is reported to accelerate the rate of biomass production and plant maturation. The only caveat is that any additive(s) should be compatible with the main components of the fungicide composition, for example, the additives should not be substantially toxic to the microorganisms, and they should not degrade or inactivate the chemical fungicide(s).

Other embodiments are further directed to methods of preventing, treating or reducing fungus infection in plants, plant media, on seedlings and on grains or fruit, by spraying or inoculating plants with the BCFs of the present invention.

The fungicides of the present invention have little or no residual soil activity, are rapidly degraded, and soil microorganisms can use the nutrients in the fungicides. BCFs are also substantially non-toxic to humans and animals, and are not corrosive to eyes and skin. BCFs can be applied as other fungicides known in the art are applied, including as a spray, soil drench, or powder. BCFs inhibit or destroy the pathogenic fungi that occur in plants or in parts of plants (fruit, blossoms, leaves, stems, tubers, and roots) in crops of useful plants. They can also be used as dressing agents for protecting seeds (fruit, tubers, and grains) and plant cuttings against fungus infections such as *Rhizoctonia* and *Schlerotinia* that occur in the soil.

### The Biologic Component

Microorganisms in the biologic component can be (1) inactive spores, (2) active, living and multiplying microorganisms in the vegetative state, or (3) a combination of spores and vegetative microorganisms. The biologic component should be compatible with the chemical fungicide, i.e., the microorganisms in the biologic component should not be inactivated or killed by the chemical fungicide or other additives.

The inclusion of bacteria in the fungicide compositions of the present invention is believed to have many advantages. Bacteria on the surface of plant foliage and roots, potentially out-compete fungi for both space and nutrients, for example, by selectively removing critical nutrients such as organic compounds. Certain microorganisms may act by exuding antibiotics or other compounds that are beneficial to the host plant. The bacteria in the BCFs typically consume approximately 25 % of the sugar a plant produces, and convert it to chemical precursors of plant growth substances including auxins, cytokinins, betains, and ethylene that enhance plant growth and vitality. Suppressive bacteria can be selected that inhibit or kill pathogenic fungi in numerous ways including changing the pH of the microenvironment to one that inhibits or kills the fungi, and producing harmful byproducts like hydrogen cyanide, antifungal substances, cell-wall degrading (lytic) enzymes, and iron chelating compounds called siderophores. Mixtures of bacteria inevitably contain some dead bacteria, however, these are not harmful to the targeted plants. Indeed the metabolic products of dead bacteria such as enzymes are useful to the targeted plants. Bacteria and other microorganisms are small enough to be sprayed even through blast systems, which use high pressure and small apertures with little loss of bacteria numbers or viability. Further, the agricultural industry has identified many non-pathogenic bacteria and other microorganisms that can be used in the present compositions. When applied as foliar sprays, the microorganisms, the chemical fungicides and the nutrients in the BCF compositions will cover the plant tissue, including the leaf surface, stems, fruit, and shoots. If applied as soil inocula, the microorganisms will spread to and cover the plant's roots.

In one aspect of the present invention, BCF compositions are specifically formulated to include microorganisms that are known to control or suppress one or more types of pathogenic fungi, although bacteria and other microorganisms without suppressive activity can also be used. Microorganisms that control soil-borne fungal pathogens include *Trichoderma* sp., *Bacillus subtilis,* and *Penicillium* sp; microorganisms that control insects include *Bacillus* sp. *e.g. Bacillus popalliae.* These microorganisms are well known and are readily available from public depositories including the American Tissue Culture Collection (ATCC). Microorganisms known in the art to be pathogenic to the targeted plants should not be used. In another aspect, microorganisms are selected that have other qualities that are beneficial to the targeted crops, such as *Azospirillum* (gram-positive bacteria) that are reported to increase seed yield and dry matter production of sesame when applied with humic acid.

Examples of bacteria for use in the present invention include but are not limited to: *Bacillus* (gram-positive bacteria) sp., especially *Bacillus subtilis* including A and B, *Bacillus amyloiquefaciens* A, B and C, and phosphorous stabilizing *Bacillus* organisms such as *Bacillus azotofixans, Bacillus polymyxa, Bacillus licheniformis, Bacillus megatherium, Bacillus coagulans,* and *Bacillus pumulis; Clostridium* (gram-positive bacteria), such as *Clostridium pasteurianum; Rhodopseudomonas,* such as *Rhodopseudomonas capsula; Rhizobium* that fix atmospheric nitrogen; cytokinin-producing microorganisms such as *Azobacter* (gram-negative bacteria) including *Azobacter vinelandei* and *Azobacter chroococcum;* microorganisms from the genera *Pseudomonas,* such as *Pseudomonas fluorescens; Athrobacter* (gram-negative bacteria), such as *Anthrobacter globil; Penicillin* (gram-positive bacteria); *Flavobacterium* (gram-positive bacteria) sp.; *Saccharomyces (fungus),* such as *Saccharomyces cerevisiae*; *Streptomyces* (fungus), including *Streptomyces greisus; Actinomyces* (fungus); and *Trichoderma* (soil fungi).

Two different mixtures of bacteria were included in the chlorothalonil-containing BCF that was tested in Example 2. These bacteria mixtures were Naturize PRIME® and Naturize RAPID RESPONSE®, described in Table 1.

**Table 1**

| | **Contents:** | **Concentration:** |
|---|---|---|
| **Naturize PRIME®** | *Bacillus subtilis A* | 28 x 10⁵ cfu/ml |
| | *Bacillus amyloliquefaciens A* | 7.5 x 10⁵ cfu/ml |
| | *Bacillus amyloliquefaciens* B | 9.5 x 10⁵ cfu/ml |
| All bacteria in Naturize PRIME® are in spore form. Naturize PRIME® (Spore form) contains a total of 4.5 X 10⁶ cfu/ml. | | |
| | | |
| **Naturize RAPID RESPONSE**® | | |
| | *Bacillus subtilis B* | 2.2 x 10⁸ cfu/ml |
| | *Bacillus amyloliquefaciens C* | 5.9 x 10⁷ cfu/ml |
| | *Bacillus subtilis* | 8.9 x 10⁷ cfu/ml |
| All bacteria in Naturize RAPID RESPONSE® are active in the vegetative form. Rapid (Vegetative form contains a total of 3.68 X 10⁸ cfu/ml. | | |

The bacteria in Naturize RAPRID RESPONSE™ and Naturize PRIME™ have some inherent, suppressive activity against pathoghenic fungi. In the examples that follow, equal amounts of Naturize RAPID® and Naturize PAIME® were included in a chlorothalonil-containing BCF formulation, so that the final formulation contained both spores and vegetative bacteria. The chlorothalonil-containing BCFs described in the examples below contain approximately 8.8 x 10¹⁰ cfu per forty (40) gallons of final product applied as a foliar spray to about one acre of crops. The amount of microorganisms and chemical fungicide(s) in the final BCF formulation will vary significantly with the type of fungicide used, the species of fungi to be controlled, the crop being sprayed, environmental disease pressure, climate, and the like which can be determined based on routine experimentation. Thus, the amount of microorganisms included in the BCF compositions of the present invention can vary over a wide range, from about 1 x 10² to about 1 x 10¹⁴ cfu per acre.

### The Nutrient Component

The nutrient component can be any nutrient matrix that supports the growth of the microorganisms in the biologic component, including matrices that are rich in nitrogen, phosphorous and potassium macronutrients. Any combination of naturally occurring or synthetic nutrients can be used. In one aspect, the nutrient matrix is a complex humate-based carbon nutrient source as defined herein. Under certain conditions the nutrient component can be eliminated, for example, where the compositions are applied to organic soils that are rich in complex carbon compounds. Such BCF compositions without a nutrient component can be applied to organic soils as soil drenches for the treatment of soil borne fungal diseases. The nutrient component can also be eliminated where the crops and the weather conditions would support the growth of the microorganisms in the BCF compositions once they are applied. The nutrient component used in Example 2 below is a concentrated complex humate-based carbon nutrient-containing matrix called Naturize PLUS®, that includes 2.3 volume % humic acid, and 5.1 volume % kelp extract *(Ascophylum nodostum)* dissolved in aqueous solution.

### Biologic-Chemical Fungicides: Addition of microorganisms to Chlorothalonil Increased Efficacy More than Four-Fold

Example 1 is a description of the formulation of a chlorothalonil-containing biological-chemical fungicide that was tested in Example 2. Example 2 describes experiments that tested the efficacy in controlling infection of Penncross bentgrass by the pathogenic fungus *Selerotina homeocarpa* (Dollar Spot), of different foliar sprays with and without chlorothalonil (DACONIL WS™), and with and without added microorganisms. The biologic component was bacterial, and it was provided by Naturize RAPID RESPONSE® and Naturize PRIME®. NATURIZE PLUS® provided nutrients. Chlorothalonil was purchased from Syngenta as DACONIL WEATHER STIK™.

**Table 2**

| | |
|---|---|
| SET 1: | Biologic/Nutrient Component only |
| SET 2. | Control (water) |
| SET 3. | 4X DACONTL WS™ (4 and 1/8 ounces of full strength DACONIL WS™ per 1000 square feet) |
| SET 4. | 1X DACONIL WS™ (1 and 1/32 ounce of full strength DACONIL WS™ per 1000 square feet) |
| SET 5. | Control (water) |
| SET 6. | Biologic/Nutrient Component plus 1X DACONIL WS™. |

All flats were inoculated with a spore suspension of the fungus *Sclerotina homeocarpa* (Dollar Spot) 24 hours *after* foliar spraying with the compositions listed in Table 2. A scale of 0 to 5 was used to rate fungus infection, with 0 being no visible disease and five being heavily infected. As expected, the highest amount of chlorothalonil (SET 3 =4X DACONIL WS™) was much more effective than SET 4 (1X DACONLL WS™), which contained only one fourth the amount of chlorothalonil. The new BCF composition in SET 6 (1X DACONIL WS™) with the lower amount of chlorothalonil was more effective in controlling or preventing Dollar Spot than four times the amount of chlorathalonil applied without microorganisms (4X DACONIL WS™/SET 3). These results indicate that there is a synergistic effect between the biologic component and the chemical fungicide that increases the antifungal activity of the combination, over the activity of either component applied alone. The synergism is not attributed to the nutrient component which has no antifungal activity and which was included only to support bacterial growth and replication.

Results from SET 3 and SET 6 are shown in Table 3. SET 3 treated with the highest concentration of chlorothalonil (4X DACONIL WS™) produced only two disease-free plants, four 1s, and four 2s. By contrast, the SET 6 with one-fourth the amount of chlorothalonil plus the biologic and nutrient components (Biologic/Nutrient + 1X DACONIL WS™) produced six disease-free plants, three 1s and one 2.

**Table 3**

| | Level 0 Zero detectable disease | Level 1 | Level 2 |
|---|---|---|---|
| SET 3 4X DACONIL WS™ | 2 | 4 | 4 |
| SET 6 Biologic/Nutrient Plus 1X DACONIL WS™ | 6 | 3 | 1 |

The amount of DACONTL WS™ that was used in SET 3 in Example 2 was about in the middle of the range of label rates recommended by the manufacturer. The manufacturer's recommended label rate for DACONIL WS™ is 3 ounces per 1,000 square feet to 6 ounces per 1,000 square feet. The amount of DACONIL WS™ used in Example 2 was 4 and 1/8^{th} ounces of full strength DACONIL WS™ per 1000 square fee in SET 3, and 11/32 ounce of full strength DACONIL WS™ per 1000 square feet in SETs 4 and 6. The results show that adding microorganisms permitted a reduction in the amount of DACONIL WS™ by at least 75% of the mid-range of the manufacturer's recommended label rate (which is a reduction equivalent to about 30% of the manufacturer's minimum label rate) with no loss of efficacy. Therefore, in one aspect of the invention the amount of a chemical fungicide in the BCF ranges from about the maximum label rate, to about 10% of the minimum label rate. Where the BCF comprises more than one chemical fungicide, the amount of each chemical fungicide in the final composition can similarly range from about the maximum label rate, to about 10% of the minimum label rate of the chemical fungicide.

If the chemical fungicide(s) in the final BCF composition is at or near fifty percent of the minimum label rate or greater, then the BCF can be applied less frequently than the recommended frequency of application of the chemical fungicide alone. Less frequent application also reduces the amount of environmental pollution from the application equipment. In summary, the addition of a biologic component to chemical fungicide(s) thus permits the application of substantially lower amounts of chemical fungicide over time either by applying less chemical fungicide per application, or by reducing the number of applications, or both.

The BCFs of the present invention will be diluted to different strengths depending on how they are applied. For example, if it is determined that the correct amount of BCF to be applied to a given crop is one pint per acre, this one pint of fungicide will be diluted: (1) to a volume of about 5 gallons if it is applied to the ground, (2) to a volume of between about 5 and 10 gallons if it is applied as aerials (by airplanes), (3) to a volume of about 35 gallons if it is applied by a ground rig, and (4) to a volume of between about 10,000 and 100,000 gallons if it is applied when using irrigation methods. Thus, the range of dilution varies by a factor of about 10⁵. The biologic component and optional nutrient component will be similarly diluted based on the mode of application. The fungicides of the present invention are typically applied in a more dilute solution when used as a soil drench than they are when applied as a foliar spray.

### Chemical-free Biologic Fungicides

The results in Example 2 also demonstrated that the mixtures of suppressive *Bacillus* bacteria in Naturize PRIME® and Naturize RAPID RESPONSE® had some inherent antifungal activity even without the addition of chemical fungicides. There was significantly less infection with a foliar spray of Biologic/Nutrient mixture only (SET 1), compared to water-treated controls (SETS 2 and 5). Therefore, other embodiments include formulations of chemical-free biologic fungicides that have microorganisms that have suppressive activity against pathogenic fungi. A particular embodiment covers the combination of *Bacillus* bacteria in Naturize PRIME® and Naturize RAPID RESPONSE®, for use in compositions of chemical-free biologic fungicides. Such chemical-free biologic fungicides are especially useful on organically grown crops.

The present BCFs and chemical-free biologic fungicide compositions can be used on any plants including plant media, seedlings, grains and fruit. Post harvest fungicides approved by the FDA can be used in the BCF compositions for application to grains and fruit after harvesting to prevent fungal infections during storage and shipping. For example, the FDA-approved post harvest fungicides include Ridamil that controls the pathogenic fungi *Fythium,* and DACONIL that controls *Rhizotconia.* The chemical fungicide glycophosphoric acid (a fatty acid) has been reported as approved for human and animal use as a food emulsifier. Therefore another embodiment of the present invention is the combination of glycophosphoric acid with a biologic component (with or without a nutrient component) to make a nontoxic BCF composition for use on crops and on stored fruits and grain.

The BCFs and chemical-free biologic fungicides, and related methods permit the use of any known chemical fungicide(s), as long as they are not used in amounts that are substantively toxic to the microorganisms in the composition or to the plants being sprayed. Almost any microorganism (including bacteria, yeast and fungi, or combinations thereof) can be used, and any nutrient source that would support the growth of the microorganisms in the biologic component can be used.

### Any chemical fungicide(s) can be used in the present invention

In certain embodiments of the present invention, the fungicide(s) is an aromatic fungicide, such as chlorothalonil that is commercially available as DACONIL WS™, Bravo® W-75, NOPCOCIDE™, and EXOTHERM TERMIL™. The production and use of chlorothalonil are described in U.S. Patent Nos. 3,290,353; 3,331,735; and 3,948,636. Chlorothalonil is also a member of the class of chloronitrile compounds. Other aromatic fungicides that come within the scope of the present invention include biphenyl, chloroneb, chlorothalonil, cresol, dicloran, hexachlorobenzene, nitrothal-isopropyl, pentachlorophenol, quintozene, sodium pentachlorophenoxide, and tecnazene.

Other fungicides either alone or in combination, that are useful in embodiments of the present invention include (1) the 2R,4S-isomer of propiconazole and other propiconazole fungicides that are described in United States Patent 5,288,747, and are reported to exhibit total plant-microbicidal activity with comparatively low plant toxicity; (2) copper-containing fungicide compositions disclosed in United States Patent 4,475,326, Kuyama, (3) fungicide compositions containing triazoles and a pyrimidinamine derivative (4-cyclopropyl-6-methyl-N-phenyl-2-pyrimidinamine) disclosed in United States Patent 5,627,188; (4) substituted heterocyclic compounds disclosed in United States Patent 6,177,459; (5) valinamide derivatives cf. EP-A 472,996 and those disclosed in United States Patent 6,245,772; (6) methoximinomethyldioxazines disclosed in United States Patent 6,262,451; (7) alkoximmomethyldioxazine derivatives disclosed in United States Patent 6,281,209; (8) Oxime derivatives as disclosed in U.S. Patent 6,271,226; (9) fungicide compounds in which a nitrogen-containing heterocycle is attached through an oxymethylene linking group to a phenyl ring containing an ortho methyl .beta.-methoxyacrylate group or methyl .beta.-methoxyiminoacetate group or an amide derivative thereof disclosed in U.S. Patent 5,830,890; (10) Pyridine derivatives disclosed in U.S. Patent 6,124,356 and 6,169; (12) fungicide compounds in which a substituted pyridine ring is linked through an oxymethylene group to a phenyl ring containing an ortho methyl .beta.-methoxyacrylate group as described in, for example, EP-A-0278595 and EP-A-0350691 including compounds in which the pyridine carries a 6-trifluoromethyl substituent; (13) fungicide compounds containing a methyl .beta.-methoxyiminoacetate group and amide derivatives are described in, for example, EP-A-0363818 and EP-A-0398692; and (14) Dithiocarbamate fungicides disclosed in United States Patent 6,004,570. All of these publications and patents are incorporated in their entirety herein by reference.

Chemical fungicides that are useful in the present invention can also be conveniently organized by chemical classes as follows. Aliphatic nitrogen fungicides include: butylamine, cymoxanil, dodicin, dodine, guazatine, iminoctadine, anilide fungicides: cyprofuram, flusulfamide, nicobifen, ofurace, oxadixyl, pyracarbolid, thifluzamide, and tiadinil. Benzanilide fungicides include: benodanil, flutolanil, mebenil, mepronil, salicylanilide, and teeloftalam. Furanilide fungicides include: cyclafuramid, fenfuram, furcarbanil, furmecyclox, and methfuroxam. Oxiathiin fungicides include: carboxin, and oxycarboxin. Antibiotic fungicides include: blasticidin-S, cycloheximide, griseofulvin, kasugamycin, natamycin, polyoxins, polyoxorim, streptomycin, and validamycin. Strobin fungicides include: azoxystrobin, dimoxystrobin, kresoxim-methyl, metominostrobin, picoxystrobin, pyraclostrobin, and trifloxystrobin. Aromatic fungicides include: biphenyl, chloroneb, chlorothalonil, cresol, dicloran, hexachlorobenzene, nitrothal-isopropyl, pentachlorophenol, quintozene, sodium pentachlorophenoxide, and tecnazene. Benzimidazole fungicides include: benomyl, carbendazim, chlorfenazole, cypendazole debacarb, fuberidazole, mecarbinzid, rabenzazole, and thiabendazole. Benzimidazole precursor fungicides include: furophanate, thiophanate, and thiophanate methyl. Carbamate fungicides include: diethofencarb, furophanate, iprovalicarb, proparnocarb, thiophanate, and thiophanate-methyl. Benzimidazolylcarbamate fungicides include:, benomyl, carbendazim, cypendazole debacarb, mecarbinzid conazole fungicides: azaconazolebromuconazole, climbazole, clotrimazoie, cyproconazole, diclobutrazol, difenoconazole, diniconazole, , diniconazole-M, epoxiconazole, etaconazole, fenbuconazole, fluquinconazole, flusilazole, flutriafol, furconazole, furconazole-cis, hexaconazole, imazalil, imibenconazole, ipconazole, metconazole, myclobutanil, oxpoconazole, pencanazole, prochloraz, propiconazole, quinconazole, simeconazole, tebuconazole, tetraconazole, triadimefon, triadimenol, triflumizole, triticonazole, and uniconazole. Copper fungicides include: Bordeaux mixture, Burgundy mixture, Cheshunt mixture, copper acetate, copper carbonate, basic copper hydroxide, copper naphthenate, copper oleate, copper xychlóride, copper sulfate, copper sulfate, basic copper, zinc chromate, cufraneb, cuprobam, cuprous oxide, mancopper oxine, and copper. Dicarboximide fungicides include: captafol, captan, folpet, iprodione, procymidone, thiochlorfenphim, and vinclozolin. Dinitrophenol fungicides include: binapacryl, dinobuton, dinocap, dinocap-6, dinocton, dinopenton, dinosulfon, dinoterbon, DNOC, and suitropen. Dithiocarbamate fungicides include: azithiram, carbamorph, cufraneb, cuprobam, dazomet, disulfiram, etem, ferbam, mancopper, mancozeb, maneb, metam, metiram, milneb, nabam, polycarbamate, propineb, tecoram, thiram, zineb, and ziram. Imidazole fungicides include: cyazofamid, fenapanil, fenamidone, glyodin, iprodione, isovaledione, pefurazoate, triazoxide, see also conazole fungicides, inorganic fungicides potassium azide, potassium thiocyanate, sodium azide, and sulfur. See also copper fungicides. See also Inorganic mercury fungicides mercuric chloride, mercuric oxide, mercurous chloride. Organomercury fungicides include methylmercury acetate, ethylmercury bromide, ethylmercury chloride, ethylmercury phosphate, 2-methoxyethylmercury chloride, methylmercury benzoate, methylmercury dicyandiamide, phenylmercuriurea, phenylmercury acetate, phenylmercury chloride, phenylmercury nitrate, phenylmercury salicylate, thiomersal , and tolylmercury acetate. Morpholine fungicides include aldimorph, benzamorf, carbamorph, dimethomorph, dodemorph, and fenpropimorph, tridemorph. Organophosnhorus fungicides include ampropylfos, ditalimfos, edifenphos, fosetyl, hexylthiofos, iprobenfos, phosdiphen, pyrazophos, tolclofos-methyl, and triamiphos. Organotin fungicides include decafentin, fentin, and tributyltin oxide, Oxazole fungicides: chlozolinate, dichlozoline, drazoxolon, famoxadone, hymexazol, metazoxolon, myclozolin, and oxadixyl. Phenylsulfamide fungicides include: dichlofluanid, and tolylfluanid. Phenylurea fungicides including pencycuron. Polysulfide fungicides include: barium polysulfide, calcium polysulfide, potassium polysulfide, and sodium polysulfide. Pyridine fungicides include buthiobate, dipyrithione, fluazinam, nicobifen, pyridinitril, pyrifenox, pyroxychlor, and pyroxyfur. Pyrimidine fungicides include: bupirimate, cyprodinil, diflumetorim, dmiethinmol, ethirimol, fenarimol, ferimzone, mepanipyrim, nuarimol, pyrimethanil, and triarimol. Pyrrole fungicides include: fenpicionil, fludioxonil, and fluoroimide. Quinoline fungicides include: ethoxyquin, halacrinate, 8-hydroxyquinoline sulfate, quinacetol, and quinoxyfen. Quinone fungicides include: benquinox, chloranil, dichlone, and dithianon. Quinoxaline fungicides include chinomethionat, chlorquinox, thioquinox thiazole fungicides: ethaboxam, etridiazole, metsulfovax, octhilinone, TCMTB, and thiadifluor. Thiocarbamate fungicides include: methasulfocarb and prothiocarb. Triazole fungicides include: bitertanol, fluotrimazole, triazbutil see also conazole fungicides xylylalanine fungicides: benalaxyl, furalaxyl, metalaxyl, and metalaxyl-M. Unclassified fungicides include: acypetacs, allyl alcohol, anilazine, bentaluron, benzalkonium chloride, benzamacril, benzohydroxamic acid, bethoxazin, bithionol, carpropamid, carvone, chlobenthiazone, chloraniformethan, chloropierin, cyflufenamid, dazomet, DBCP, dehydroacetic acid, dichlorophen, diclocymet, diclomezine, diethyl pyrocarbonate, diphenylamine, fenaminosulf, fenhexamid, fenitropan, fenoxanil, fenpropidin, ferimzone, flumetover, formaldehyde, furametpyr, hexachlorobutadiene, isoprothiolane, methyl bromide, methyl isothiocyanate, metrafenone, nitrostyrene, nitrothal-isopropyl, OCH, 2-phenylphenol, phthalide, probenazole, pyroquilon, quinazamid, silthiofam sodium, orthophenylphenoxide, spiroxamine, thicyofen, tioxymid, trichlamide, tricyclazole, triforine, zarilamid, zinc naphthenate, and zoxamide.

### Pathogenic Fungi Controlled by the present compositions and methods:

The main area in which the embodiments of the present invention are used is in the prevention and control of harmful phytopathogenic fungi, against which the compositions have very advantageous curative, preventive and systemic actions for protecting cultivated plants without having undesired side effects on such plants. Such pathogenic fungi include *Plasmodiophoromycetes, Oomycetes, Chytridiomycetes, Zygomycetes, Ascomycetes, Basidiomycetes* and *Deuteromycetes, Ascomycetes* (e.g. *Erysiphe, Venturia, Pyrenophora* (mature form of *Helminthosporium), Calonectria graminicola* (mature form *of Fusarium); Basidiomycetes,* e.g. *Tilletia* and *Ustilago;* Fungi imperfecti, e.g. *Helmilithosporium, Fusarium, Septaria, Cercospora.* Some pathogens causing fungal diseases which come under the generic names listed above are included as examples, but not by way of limitation:
*Pythium* species, such as, for example, *Pythium ultimum*;
*Phytophthora* species, such as, for example, *Phytophthora infestans*;
*Pseudoperonospora* species, such as, for example, *Pseudoperonospora humuli* or *Pseudoperonospora cubense*;
*Plasmopara* species, such as, for example, *Plasmopara viticola*;
*Peronospora* species, such as, for example, *Peronospora pisi* or *Peronospora brassicae*;
*Erysiphe* species, such as, for example, *Erysiphe graminis, Erysiphe graminis* (that attacks wheat, barley, rye, oats);
*Sphaerotheca* species, such as, for example, *Sphaerotheca fuliginea*;
*Padosphaera* species, such as, for example, *Podosphaera leucotricha*;
*Venturia* species, such as, for example, *Venturia inaequalis*;
*Pyrenophora* species, such as, for example, *Pyrenophora teres* or *Pyrenophora graminea* (conidial form: *Drechslera*, synonym: *Helminthosporium*);
*Cochliobolus* species, such as, for example, *Cochliobolus sativus* (conidiae form: *Drechslera*, synonym:),
*Drechslera teres* (that attacks barley, wheat);
*Uromyces* species, such as, for example, *Uromyces appendiculatus*;
*Puccinia* species, such as, for example, *Puccinia recondita, Puccinia graminis* (that attacks wheat, barley, rye, oats);
*Tilletia* species, such as, for example, *Tilletia caries* (that attacks barley, wheat, rye);
*Ustilago* species, such as, for example, *Ustilago nuda* or *Ustilago avenae*;
*Pellicularia* species, such as, for example, *Pellicularia sasakii*;
*Pyricularia* species, such as, for example, *Pyricularia oryzae*;
*Fusarium* species, such as, for example, *Fusarium culmorum, Fusarium nivale* (that attacks rye); *Fusarium culmorum* (that attacks wheat);
*Botrytis* species, such as, for example, *Botrytis cinerea*;
*Septaria* species, such as, for example, *Septoria nodorum*;
*Leptosphaeria* species, such as, for example, *Leptosphaeria nodorum*;
*Cercospora* species, such as, for example, *Cercospora canescens*;
*Altemaria* species, such as, for example, *Alternaria brassicae*; and
*Pseudocercosporella* species, such as, for example, *Pseudocercosporella herpotrichoides, Pseudocercosporella herpotrichoides* (that attacks rye);
*Helminthosporium gramineum* (that attacks barley, wheat);
*Helminthosporium oryzae* (that attacks rice);
*Ustilago tritici* (that attacks wheat); and
*Ustilaga maydis* (that attacks maize);
Only the most important crops are listed in parenthesis.

### Formulations:

The various components of the BCF compositions (the nutrients, the biologic component, humate, surfactants, dispersants, chemical fungicides etc.) are typically in a suspension or solution when formulated into the final composition, however, these components can be added in dry form. Final formulations can be determined using routine greenhouse testing on various plants that are, infected with various pathogenic fungi.

The compositions of the present invention can be applied in any way known in the art. They can be applied formulated or unformulated, directly to the foliage of a plant, to seeds or to other medium in which plants are growing or are to be planted. The BCFs can be sprayed on, dusted on or applied as a cream or paste formulation, or they can be applied as a vapor or as slow release granules.

As a foliar spray, the fungicide compositions are applied to plant foliage by methods commonly employed, such as conventional high-gallonage hydraulic sprays, low-gallonage sprays, air-blast, aerial sprays and dusts. Application can be to any part of the plant including the foliage, stems, branches or roots, or to soil surrounding the roots, or to the seeds as a coating by impregnating the seeds or other propagating material (such as shoots and lumps) with a liquid formulation of a composition of the invention before it is planted. The coated propagating material thus obtained is a further embodiment of this invention. The fungicides of the invention may also be injected into plants or sprayed onto vegetation using electrodynamic spraying techniques or other low volume methods, or applied by land or aerial irrigation systems. The dilution and rate of application will be adjusted depending upon the type of equipment employed, the method and frequency of application desired, the crop, the climate, and the fungus diseases to be controlled. The amount of fungicide, bacteria, nutrient matrix and additives can be adjusted to accommodate the growers' particular needs.

The microorganisms can be separately encapsulated in water soluble coatings, e.g., dyed or undyed gelatin spheres or capsules, or by micro-encapsulation to a free flowing powder using one or more of gelatin, polyvinyl alcohol, ethylcellulose, cellulose acetate phthalate, or styrene maleic anhydride. The compositions can also be formulated in paraffin. The separately encapsulated microorganisms can then be mixed with the non-encapsulated components. In one embodiment, encapsulation of the microorganisms includes nutrients as well as the microorganisms.

For the preparation of emulsifiable concentrates, the compositions used in the invention can be dissolved in suitable solvents or a mixture of solvents, together with an emulsifying agent that permits dispersion of the active compounds in water. Wettable powders suitable for spraying, can be prepared by admixing the composition with a finely divided solid, such as clays, inorganic silicates and carbonates, and silicas and incorporating wetting agents, sticking agents, and/or dispersing agents in such mixtures. Dusts are prepared by mixing the composition of the present invention, or salts and complexes thereof, with finely divided inert solids, which can be organic or inorganic in nature. Inert materials useful for this purpose include botanical flours, silicas, silicates, carbonates and clays.

Compositions according to the embodiments can also be prepared by formulating each of the active ingredients separately, and then mixing them together. The application amount varies with weather conditions, formulation, application timing, application method, application location, objective fungus to be controlled or objective crop to be protected.

The present compositions may be formulated to include a solid carrier to make, for example solupak and tablets. When formulated into dustable powders or granules, fillers can be used such as kaolin, bentonite, kieselguhr, dolomite, calcium carbonate, talc, powdered magnesia, fuller's earth, gypsum, diatomaceous earth and china clay. Such granules can be preformed granules suitable for application to the soil without further treatment. These granules can be made either by impregnating pellets of filler with the active ingredient or by pelleting a mixture of the active ingredient and powdered filler.

Compositions for dressing seed may include an agent (for example, a mineral oil) for assisting the adhesion of the composition to the seed; alternatively the active ingredient can be formulated for seed dressing purposes using an organic solvent (for example, N-methylpyrrolidone, propylene glycol or N,N-dimethylformamide).

When the microorganisms are in spore form, they can be formulated into soluble powders or granules, which may contain surface-active agents to improve water dilution and prevent crystallization in a spray tank.

Aqueous suspension concentrates of largely insoluble solids may be prepared by ball or bead milling with a dispersing agent with a suspending agent included to stop the solid settling. Compositions to be used as sprays may be in the form of aerosols wherein the formulation is held in a container under pressure of a pxopeliant, e.g. fluorotrichloromethane or dichlorodifluoromethane. They may also be formulated in biodegradable polymeric formulations to obtain a slow, controlled release of the active substance. Water dispersible powders, emulsifiable concentrates and suspension concentrates will normally contain surfactants, e.g. a wetting agent, dispersing agent, emulsifying agent or suspending agent. These agents can be cationic, anionic or non-ionic agents.

Concentrates should preferably be able to withstand storage for prolonged periods and after such storage be capable of dilution with water in order to form aqueous preparations which remain homogeneous for a sufficient time to enable them to be applied by conventional spray equipment.

It is usually desirable, particularly in the case of foliar spray formulations, to include adjuvants, such as wetting agents, spreading agents, dispersing agents, stickers, adhesives and the like in accordance with agricultural practices. Such adjuvants commonly used in the art can be found in McCutcheon's "Emulsifiers and Detergents", McCutchcon's "Emulsifiers and Detergents/Functional Materials" and McCutCheon's "Functional Materials" all published annually by McCutcheon Division of MC Publishing Company (New Jersey). The fungicide compositions of the present invention typically have one or more surfactants. The surfactants customarily employed in the art of formulation of mixtures for foliar sprays or soil drenches are described e.g. in "1985 International McCutcheon's Emulsifiers and Detergents" Glen Rock, NY 07452, USA; "Encyclopedia of Surface Active Agents", Chemical Publishing Co., Inc. New York, 1980. Suitable surface-active compounds are nonionic, amphoteric and/or anionic surfactants having good emulsifying, dispersing and wetting properties. The term "surfactants" will also be understood as comprising mixtures of surfactants.

Surfactants improve the uptake, distribution, adhesive power and resistance to rain on treated surfaces. Other additives may be included to improve the biological efficacy such as surface active materials to improve the wetting and retention on surfaces treated with the formulation and the uptake and mobility of the active material. These include oil based spray additives, for example, certain mineral oil and natural plant oil (such as soya bean and rape seed oil) additives, or blends of them with other adjuvants.

The invention is further described by the following non-limiting examples.

### EXAMPLES

### EXAMPLE 1

### Composition of the Biologic/Nutrient Mixtures

The microorganisms used in the experiments described in Example 2 were provided by Naturize PRIME® and RAPID RESPONSE®.

| | **Contents:** | **Concentration:** |
|---|---|---|
| **Naturize PRIME®** | | |
| | *Bacillus subtilis* A | 28 x 10⁵ cfu/ml |
| | *Bacillus amyloliquefaciens A* | 7.5 x 10⁵ cfu/ml |
| | *Bacillus amyloliquefaciens* B | 9.5 x 10⁵ cfu/ml |
| All bacteria in Naturize PRIME® are in spore form. Naturize PRIME® (Spore form) contains a total of 4.5 X 10 cfu/ml. | | |
| | | |

| **Naturize RAPID RESPONSE®** | | |
|---|---|---|
| | *Bacillus subtilis* B | 2.2 x 10⁸ cfu/ml |
| | *Bacillus amyloliquefaciens* C | 5.9 x 10⁷ cfu/ml |
| | *Bacillus subtilis* | 8.9 x 10⁷ cfu/ml |
| All bacteria in Naturize RAPID RESPONSE® are active in the vegetative form. Naturize RAPID RESPONSE® contains a total of 3.68 X 10⁸ cfu/ml ml. | | |

The bacteria in Naturize RAPRID RESPONSE™ and Naturize PRIME™ have some inherent, suppressive activity against pathoghenic fungi.

1ml RAPID RESPONSE® + 1 ml Naturize PRIME® = 3.725 X 10⁸ cfu/per 2 ml or 1.86 X 10⁸ cfu/ml.

1.86 X 10⁸ cfu/ml 1:1_RAPID RESPONSE® + Naturize PRIME® X 29.57 ml/oz =0.551 x 10¹⁰ cfu/oz. of 1:1 RAPID RESPONSE® + Naturize PRIME®.

0.551 10¹⁰ cfu/oz. X 16 oz 1:1 RAPID RESPONSE® + Naturize PRIME® in the final product = 8.816 x 10¹⁰ cfu/16 oz. 8.816 x 10¹⁰ cfu is the amount of microorganisms that were diluted to a final volume of forty (40) gallons which is appropriate for application to about one acre of crops.

8 oz. of PRIME® and PRIME® are added to 40 gallons. Therefore, the final 40 gallon formulation contained 0.156 volume % each of Naturize PRIME® and Naturize RAPID RESPONSE®.
All bacteria and microorganisms in the present invention were suspended in an aqueous solution. The nutrient component used in Example 2 below is a complex humate-based carbon nutrient-containing matrix nutritive component concentrate called Naturize PLUS®, which is 2.3 volume percent humic acid, and 5.1 volume % kelp extract *(Ascophylum nodostum)* dissolved in aqueous solution. 8 ounces ofNaturize PLUS® was ultimately diluted to a final volume of forty (40) gallons in Example 2. Natunize PLUS® constituted about 0.156 volume % of the final formulation. Naturize PLUS® also contained glucopan surfactant and sodium nipposol, a stabilizer. The biologic nutrient component of the formulations in Example 2 thus contained 8 ounces vegetative form (Naturize RAPID RESPONSE®), 8 ounces spore form (Naturize PRIME®), and 8 ounces humatic/kelp mixture (Naturize PLUS®) in the final forty gallon volume. The pH of all formulations was adjusted to 7.2 with acetic acid.

### EXAMPLE 2: Greenhouse Testing Shows Fungicide activity of Chlorothalonil is increased more than four-fold when mixed and applied together with the Biologic/Nutrient mixtures.

The ability of the BCF compositions to reduce the amount of chlorothalonil (1,3-dicyano-2,4,5,6-tetrachlorobenzene, also called tetrachloroisophthalonitrile) necessary to control fungus infection on Penncross bentgrass was tested in a greenhouse experiment. 12" by 18" flats of Penncross bentgrass were treated with one foliar spray, four weeks after emergence. Six sets of ten flats per set were treated according to the treatment programs set forth below. Full strength DACONIL WS™ has 720 grams chlorothalonil/liter.

**Table 4**

| | |
|---|---|
| SET 1: | Biologic/Nutrient Component only |
| SET 2. | Control (water) |
| SET 3. | 4X DACONIL WS™ (4 and 1/8^{th} ounces of full strength DACONIL WS™ per 1000 square feet) |
| SET 4. | 1X DACONIL WS™ (11/32 ounce of full strength DACONIL WS™ per 1000 square feet) |
| SET 5. | Control (water) |
| SET 6. | Biologic/Nutrient Component plus 1X DACONIL WS™. |

All flats were inoculated once with a spore suspension of the fungus Selerotina homeocarpa (Dollar Spot) 24 hours after spraying with the respective formulation. The inoculated flats were incubated at 26 degrees Centigrade in one hundred percent (100%) relative humidity in a wet box for 24 hours and were then moved to a green house bench for an additional seven days before being rated for disease. A scale of 0 to 5 was used to rate fungus infection, with 0 being no visible disease and five being heavily infected. The results show that the addition of the Biologic/Nutrient mixture to the chemical fungicide increased the effectiveness of the chemical fungicide more than four fold.

Results are shown in Table 5. As expected, SET 3 (4X DACONIL WS™) with the highest amount of chlorothalonil was much more effective than the untreated controls (SET 1), and than SET 4 (1X DACONIL WS™), which contained only one-fourth (1/4^{th}) the amount of chlorothalonil. There was significantly less fungal infection with a foliar spray of Biologic/Nutrient mixture only (SET 1) compared to untreated controls (SETS 2 and 5), which reflects the inherent antifungal activity of the suppressive bacteria in the biologic component.

The best results were obtained with the BCF composition in SET 6 that had the lower amount of chlorothalonil plus Biologic/Nutrient mixture (SET 6-1XDACONIL WS™). The chlorothalonil-containing BCF formulation of 1XDACONIL WS™ in SET 6 more effective in controlling the fungus than four times the amount of chlorothalonil applied alone without microorganisms (SET 3---4X DACONIL WS™). This result shows that there is a synergistic effect between the biologic component and the chemical fungicide. This synergism is not attributed to the nutrient component of the BCF, which has no suppressive activity. SET 3 (4X DACONIL WS™) had only two disease-free plants, four 1s, and four 2s. By contrast, the BCF composition tested in SET 6 using only one fourth the amount of DACONIL WS™ had six disease-free plants, three 1s, and one 2.

**Table 5**

| Scale of fungus disease: 0 = no visible disease, 5 = highest level of disease | | | | | | | | | | |
|---|---|---|---|---|---|---|---|---|---|---|
| **FLATS** | **1** | **2** | **3** | **4** | **5** | **6** | **7** | **8** | **9** | **10** |
| **SET 1 B/N only** | 3 | 2 | 2 | 4 | 3 | 3 | 4 | 2 | 4 | 3 |
| **SET 2 Water** | 4 | 5 | 5 | 4 | 5 | 5 | 4 | 4 | 5 | 5 |
| **SET 3 4X DACONIL WS**™ | 1 | 2 | 0 | 1 | 2 | 1 | 0 | 2 | 1 | 2 |
| **SET 4 1X DACONIL WS™** | 2 | 1 | 3 | 3 | 2 | 1 | 3 | 2 | 2 | 1 |
| **SET 5 Water** | | 5 | 4 | 5 | 4 | 4 | 5 | 5 | 4 | 4 |
| **SET 6 1X DACONIL WS™ + B/N™** | 0 | 1 | 0 | 0 | 0 | 1 | 0 | 2 | 0 | 1 |

Other aspects of the invention include the following:
Aspect 1. A fungicide composition for treating plants comprising:
   a. one or more chemical fungicides, and
   b. microorganisms selected from the group including bacteria, fungi, microfungi, mold, lichens, algae, viruses, protozoa, and yeast.
Aspect 2. The composition of Aspect 1, further comprising nutrients in an amount sufficient to support the growth and replication of the microorganisms in the fungicide composition.
Aspect 3. A fungicide composition for treating plants comprising:
   a. microorganisms selected from the group including bacteria, fungi, microfungi, mold, lichens, algae, viruses, protozoa, and yeast, and
   b. nutrients in an amount sufficient to support the growth and replication of the microorganisms in the fungicide composition.
Aspect 4. The fungicide composition as in Aspect 2 or Aspect 3, wherein the nutrients comprise a complex carbon nutrient-containing.
Aspect 5. The fungicide composition as in Aspect 4, wherein the complex carbon nutrient-containing matrix is humate based.
Aspect 6. The fungicide composition as in Aspect 1 or Aspect 3, wherein the microorganisms comprise gram-positive bacteria.
Aspect 7. The fungicide composition as in Aspect 1 or Aspect 3, wherein the microorganisms comprise gram-negative bacteria.
Aspect 8. The fungicide composition as in Aspect 1 or Aspect 3, wherein the microorganisms comprise a mixture of gram-positive and gram-negative bacteria.
Aspect 9. The fungicide composition as in Aspect 1 or Aspect 3, wherein the microorganisms comprise yeast.
Aspect 10. The fungicide composition as in Aspect 1 or Aspect 3, wherein the microorganisms comprise fungi that are compatible with the chemical fungicide component.
Aspect 11. The fungicide composition as in Aspect 1 or Aspect 3, wherein the microorganisms comprise bacteria that have suppressive activity against pathogenic fungi.
Aspect 12. The fungicide composition of Aspect 6, wherein the gram positive bacteria comprise *Bacillus* bacteria selected from the group comprising *Bacillus subtilis A, Bacillus amyloliquefaciens A, Bacillus amyloliquefaciens B, Bacillus subtilis B, Bacillus amyloliquefaciens C, Bacillus subtilis, Bacillus popalliae,* and *Bacillus megatherium.*
Aspect 13. The fungicide composition as in Aspect 1 or Aspect 3, wherein an amount of a chemical fungicide applied is within a range of from about a maximum label rate, to about 10% of a minimum label rate.
Aspect 14. The fungicide composition as in Aspect 1 or 3, further comprising an agriculturally effective amount of adhesive, surfactant or dispersant.
Aspect 15. The fungicide composition as in Aspect 4, wherein the complex carbon nutrient-containing matrix comprises kelp or kelp extracts.
Aspect 16. The fungicide composition as in Aspect 1 or 3, further comprising a member selected from the group comprising plant hormones, auxins, cytokinins, betains, plant growth factors, and harpin protein.
Aspect 17. The fungicide composition as in Aspect 1, wherein the chemical fungicide is chlorothalonil.
Aspect 18. The fungicide composition as in Aspect 1, wherein the chemical fungicide is selected from the group comprising metal fungicides.
Aspect 19. The fungicide composition as in Aspect 1, wherein the chemical fungicide is a substituted heterocyclic compound.
Aspect 20. The fungicide composition as in Aspect 1 or Aspect 3, wherein the microorganisms are in a vegetative state.
Aspect 21. The fungicide composition as in Aspect 1 or Aspect 3, wherein the microorganisms are in spore form.
Aspect 22. The fungicide composition as in Aspect 1 or Aspect 3, formulated so that the microorganisms are in an amount sufficient to provide from about 1 x 10⁴ to about 1 x 10¹⁴ cfu per acre.
Aspect 23. A method of controlling or preventing infection of a plant by pathogenic fungi, comprising applying to the plant or to the locus of the plant, a fungicidally effective amount of the fungicide composition of Aspect 1 or Aspect 3.
Aspect 24. The fungicide composition as in Aspect 1 or Aspect 3, wherein the microorganisms comprise a mixture of bacteria comprising *Bacillus subtilis B, Bacillus amyloliquefaciens* C, and *Bacillus subtilis.*
Aspect 25. The fungicide composition as in Aspect 1 or Aspect 3, wherein the microorganisms comprise a mixture of bacteria, comprising *Bacillus subtilis A, Bacillus amyloliquefaciens A,* and *Bacillus amyloliquefaciens B.*

In the foregoing specification, the invention has been described with reference to specific embodiments thereof. It will, however, be evident that various modifications and changes may be made thereto without departing from the scope of the appended claims.

## Claims

1. A fungicide composition for treating plants comprising:
(a) one or more chemical fungicides,
(b) microorganisms, and
(c) a humate-based complex carbon nutrient-containing matrix in an amount sufficient to support the growth and replication of the microorganisms,
wherein the microoranisms are selected from the group including bacteria, fungi, mold, and yeast, and wherein the microorganisms have a synergistic effect on the effectiveness of the chemical herbicide.

2. The fungicide composition as in claim 1, wherein the microorganisms comprise gram-positive bacteria.

3. The fungicide composition as in claim 1, wherein the microorganisms comprise gram-negative bacteria.

4. The fungicide composition as in claim 1, wherein the microorganisms comprise a mixture of gram- positive and gram- negative bacteria.

5. The fungicide composition as in claim 1, wherein the microorganisms comprise yeast.

6. The fungicide composition as in claim 1, wherein the microorganisms comprise fungi that are compatible with the chemical fungicide component.

7. The fungicide composition as in claim 1, wherein the microorganisms comprise bacteria that have suppressive activity against pathogenic fungi.

8. The fungicide composition of claim 6, wherein the gram positive bacteria comprise *Bacillus* bacteria selected from the group comprising *Bacillus subtilis A, Bacillus amyloliquefaciens A, Bacillus amyloliquefaciens B, Bacillus subtilis B, Bacillus amyloliquefaciens C, Bacillus subtilis, Bacillus popalliae,* and *Bacillus megatherium.*

9. The fungicide composition as in claim 1, wherein an amount of a chemical fungicide applied is within a range of from about a maximum label rate, to about 10% of a minimum label rate.

10. The fungicide composition as in claim 1, further comprising an agriculturally effective amount of adhesive, surfactant or dispersant.

11. The fungicide composition as in claim 1, wherein the complex carbon nutrient-containing matrix comprises kelp or kelp extracts

12. The fungicide composition as in claim 1, further comprising a member selected from the group comprising plant hormones, auxins, cytokinins, betains, plant growth factors, and harpin protein.

13. The fungicide composition as in claim 1, wherein the chemical fungicide is chlorothalonil.

14. The fungicide composition as in claim 1, wherein the chemical fungicide is selected from the group comprising metal fungicides.

15. The fungicide composition as in claim 1, wherein the chemical fungicide is a substituted heterocyclic compound.

16. The fungicide composition as in claim 1, wherein the microorganisms are in a vegetative state.

17. The fungicide composition as in claim 1, wherein the microorganisms are in spore form.

18. The fungicide composition as in claim 1, formulated so that the microorganisms are in an effective amount of from 1×10⁴ to 1×10¹⁴ cfu per acre.

19. A method of controlling or preventing infection of a plant by pathogenic fungi, comprising applying to the plant or to the locus of the plant, a fungicidally effective amount of the fungicide composition of claim 1.

20. The fungicide composition as in claim 1, wherein the microorganisms comprise a mixture of bacteria comprising *Bacillus subtilis B, Bacillus amyloliquefaciens* C, and *Bacillus subtilis.*

21. The fungicide composition as in claim 1, wherein the microorganisms comprise a mixture of bacteria, comprising *Bacillus subtilis A, Bacillus amyloliquefaciens* A, and *Bacillus amyloliquefaciens B.*
